# EUROPEAN PATENT SPECIFICATION

(11) **EP 0 825 218 B1**
(45) Date of publication and mention of the grant of the patent: **12.07.2000**
(21) Application number: 97202717.1
(22) Date of filing: 22.02.1995
(51) Int. Cl.: C08G 59/24, C08L 63/00, B44C 1/17

(54) **Radiation-curable polymer compositions, for use in hot-stamping substrates**
Strahlungshärtbare Harzzusammensetzung verwendbar beim Heissprägen von Substraten
Composition de résines durcissable par irradiation utilisable dans l'estampage à chaud de substrats

(30) Priority: 22.02.1994 US 199415
(43) Date of publication of application: 25.02.1998
(62) Divisional of application: 95301169.9
(73) Proprietor: DECO PATENTS, INC., Edison, New Jersey 08818 (US)
(72) Inventor: Kamen, Melvin Edwin, Highlands, New Jersey 07732 (US); Patel, Bhupendra, Edison, New Jersey 08820 (US)
(74) Representative: Sanderson, Laurence Andrew

(56) References cited:
- US-A- 4 874 798

## Description

This invention relates to radiation-curable polymer compositions, for use in the application of decorative coatings to glass, ceramics and perhaps other substrates, by a procedure akin to that known as hot-stamping. It is one aspect of an important development of our earlier invention as described and claimed in our previous European Patent Application No. 93,3,04160.0, now EPA 0 626 354.

The present Application has been divided from other co-pending Application No. 95,3,01169.9, of even date herewith, meanwhile published as EPA 0 668 170. That parent Application describes and claims a method for applying a decorative coating to a glass, ceramic or indeed other substrate, against a background there explained as follows.

The well-established hot-stamping procedure involves applying both heat and pressure by means of a heated die or roller (hereinafter for convenience referred to generically as a "hot compress") to a so-called hot-stamping foil, consisting of a pigmented colour or metallized surface film borne on an usually-polyester carrier, so as by means of the hot compress to force it into contact with a thermoplastic substrate, and thereby soften the thermoplastic substrate and also activate the film-coating on the foil, thereby enabling it to form a strong physico-chemical bond with the underlying thermoplastic substrate wherever heat and pressure have been applied to the foil, but not elsewhere. When subsequently the foil is pulled away, just the areas of the film which have been subjected to the hot-stamping remain affixed to the plastic substrate, and the remainder peels away.

In order to carry out this hot-stamping operation one normally employs either a vertical stamping machine or a roll-on machine. The vertical stamping machine contains a heated die of brass, steel or silicone rubber, which serves to apply both heat and pressure and thus to transfer the desired pattern defined by the die (whatever that pattern may be - thus decorative areas and/or writing or other printed information) from the film onto the plastic substrate, as each part is positioned beneath the die. Roll-on methods utilise a silicone rubber roller or an arcuate die to transfer the desired pattern from the foil onto the thermoplastic substrate, in either a continuous or batch process.

Hot-stamping is an efficient and inexpensive way to apply decoration to thermoplastic substrates. Unfortunately however hot-stamping of this nature cannot be used with glass, because glass melts at a much higher temperature than most thermoplastic materials. Consequently decoration in the form of gold leaf, colour design or printing etc. is generally applied to glass containers by a glazing process similar to that used with ceramics. Thus for example in gold-leafing the gold decoration is applied to the glass container by a variety of methods such as silk-screen printing, etc. The glass container is then subjected to extremely high kiln temperatures, and in essence the decoration is baked on. Unfortunately this process is however time-consuming, expensive, energy-intensive and raises safety considerations due to the high temperatures that have to be employed and the nature of the gases which are evolved in the operation of the kilns.

There has thus been a considerable and long-standing need for a simple, economical and ultra-safe procedure for applying decoration to glass substrates, quite unfulfilled until we devised the method for achieving these objectives described in our above-mentioned EPA 0,626,354, which is akin to the known hot-stamping process but operable on glass and ceramics.

However, the problems with the recently-devised procedure as set out in our EPA 0,626,354, is that the inks do not always adhere to the glass to the degree required for commercial decorating purposes.

We have therefore carried out extensive investigations, directed to the search for an ink with excellent bond strength to glass and which at the same time is capable of adhering hot-stamping foil. The key to the achievement of commercially-acceptable decorating lies in the use of one particular class of cationically radiation-curable cycloaliphatic epoxides in a suitable composition.

Subsequent review of the state of the art has revealed that the same class of cycloaliphatic epoxides have already been proposed for use in different by-formulated curable compositions for other purposes, e.g. for automotive finishes as in U.S. Patent No. 4,874,798 or for printed circuit boards as in E.P. 0,233,358.

According to the present invention there is provided a radiation-curable polymer composition, suitable for use in the application of decorative coatings to glass, ceramics and other substrates by a procedure akin to that known as hot-stamping, said composition comprising:
from 10 to 90% of a cationically radiation-curable cycloaliphatic epoxide,
from 1 to 20% of an ester-containing polyol, and
from 1 to 20% of a polyalkyl ether defoaming agent.

The curable adhesive ink composition of the present invention must be one based upon a cationically radiation-curable cycloaliphatic epoxide. The term "cationically radiation-curable" is here used in the sense that it has become accepted in the radiation-curing art, and roughly-speaking means that the radiation curing takes place in air - as contrasted with anionic curing, which must take place under anaerobic conditions.

The cycloaliphatic epoxide employed will preferably be one having at least two epoxy groups per molecule. Polymeric cycloaliphatic epoxides are however also suitable, such as those formed as the reaction products between epichlorohydrin and phenol or a phenolformaldehyde resin, diepoxy resin, epoxidized oils and epoxidized polyolefins. Such epoxides include novolac epoxides, glycidyl ethers of various types including diglycidyl ethers of bisphenol, diglycidyl ethers of butanediol, and the like. Also suitable are homopolymers and copolymers that contain pendant epoxide groups such as those made from glycidyl acrylate and/or methacrylate with or without other ethylenically unsatured monomers. Cycloaliphatic epoxides are however also suitable, such as those set forth in U.S. Patents Nos. 3,027,357, 3,890,194, 2,890,197, 3,031,434, 3,125,592, 3,201,360 and 5,204,930 (the disclosure of all of which are incorporated herein by cross-reference). Preferred are 3,4-epoxycyclohexylmethyl-3,4-epoxycyclohexane carboxylate, bis-(3,4-epoxycyclohexylmethyl)-adipate, vinlycyclohexene diepoxide, bis(2,3-epoxycyclophenyl)ether, epoxidized butadiene and 2,3-epoxy-2-methylcyclohexylmethyl-3,4-epoxy-2-methylcyclohexane carboxylate, or mixtures thereof.

The preferred cycloaliphatic epoxides are the cationically UV-curable cycloaliphatic epoxides sold under the tradename CYRACURE by Union Carbide Chemicals and Plastics Company, Danbury, Connecticut, USA., such as CYRACURE UVR 6110, 6379, 6351 and 5200.

The proportion of the cationically UV-curable cycloaliphatic epoxide to be employed in the ink composition is not highly critical, but we use from about 10% to about 90% thereof, and recommend preferably 35-90%.

The ink composition includes an ester-containing polyol. The proportion of the ester-containing polyol to be used is not critical, but we use from about 1% to about 20% by weight, and recommend preferably 3-15%. The ester-containing polyol will advantageously be one having a molecular weight of less than 850 and a vicosity of less than 60 Pa.s (60 poise), which serves the purpose of controlling its vicosity.

Such ester-containing polyols are oligomers prepared by methods well known in the esterification or alkyd resin arts. Suitable polyols are for instance described in U.S. Patent No. 3,994,851, the disclosure of which is hereby incorporated by cross-reference. The ester-containing polyols are the reaction product of polycarboxylic acids (such as adipic, azeleic, malic, fumaric, succinic or glutaric acids) with a polyol (such as ethylene glycol, neopentyl glycol, diethylene glycol, trimethylolpropane monoallyl ether, 1,6-hexandiol, etc.).

The preferred ester-containing polyols are the polycaprolactone polyols sold under the tradename "TONE Polyols" by Union Carbide, particularly TONE Polyol 310 or trimethylolpropane caprolactone.

The curable adhesive ink composition also includes a defoaming agent, because it promotes smooth, even application of the ink onto the substrate, eliminating bubbles and distortions.

The defoaming agents which are suitable are polyalkyl ethers, such as the polyvinyl butyl ether in Stoddard solvent [this is a petroleum distillate, widely used as a dry-cleaning solvent, with a minimum flash point of 35°C (100°F) and a distillation range of from not less than 50% over at 177°C (350°F) up to an end point not higher than 210°C (410°F)] as sold under the tradenames BYK-052 and BYK-053 by BYK - Chemie.

The proportion of defoaming agent to be employed is not critical, but we use from about 1 to 20%, and recommend preferably 3-15%.

The curable adhesive ink composition may also desirably contain an adhesion-promoter, thus an agent that serves to increase the adhesion of the cycloaliphatic epoxide to the substrate. If the substrate is glass, silanes are excellent coupling agents with glass, and will promote adhesion of the ink to the substrate. Suitable acryloxy-functional silanes are described in U.S. Patent No. 5,221,560, the disclosure of which is hereby incorporated by cross-reference.

Such acryloxy-functional silanes include:
3-methacryloxypropyltrimethyloxysilane,
3-acryloxypropyl-trimethoxysilane,
2-methacryloxyethyltrimethyoxysilane,
2-acryloxyethytrimethoxysilane,
3-methacryloxypropyltriethoxysilane,
3-acryloxypropyltrimethoxysilane,
3-acryloxypropyltriethoxysilane,
2-methacryloxyethyltriethoxysilane,
3-acryloxypropyltriethoxysilane,
2-methacryloxyethyltriethoxysilane, and
2-methacryloxyethyltriethoxysilane, etc.
Glycidoxy-functional silanes may also be suitable. Such glycidoxysilanes include 3-glycidoxypropyltri-methoxysilane, 2-glycidoxyethyltrimethoxysilane, 3-glycidoxypropyltriethoxysilane, 2-glycidoxyethyltriethoxysilane, 3-glycidoxypropyltrimethylsilane and so on.

We recommend the use of from about 1 to about 10% by weight of an adhesion promoter, which can usually be relied upon to cause improved adhesion of the ink to the substrate. The glycidoxy silanes are preferred, in particular 3-glycidoxypropyltrimethylsilane.

It is of course permissible, and for some purposes it may be advantageous, to incorporate other ingredients in the curable adhesive ink composition, including for instance stabilizers, inert fillers, wetting agents, levelling agents and so on. If present, these ingredients can be in the range of from about 1 to about 15% by weight of the total composition.

At this point it is convenient to observe that compositions of this invention are specifically intended for use in the method for applying a decorative coating to a glass, ceramic or indeed other substrate which has been described and claimed in our aforesaid co-pending parent Application No. 95 3 01169.9, of even date herewith, which method comprises the steps of:
a) applying a pattern of decoration to the substrate with a curable adhesive ink composition containing a cationically radiation-curable cycloaliphatic epoxide;
b) curing the adhesive ink on the substrate by exposing it to the radiation by which it is curable, thereby to bond the cured ink to the substrate;
c) compressing a hot-stamping foil bearing a film of decorative material against the substrate with a hot compress heated to a temperature sufficient to cause the film to adhere to the cured ink pattern but not to the ink-free areas of the substrate; and
d) removing the compress, whereby the decorative film thereon remains adhered to the adhesive ink pattern only.

A wide variety of glass or ceramic articles may be provided with a decorative coating by means of that method, and so far as we are aware there is no limit on the kind of glass or ceramics that may thus be decorated. Thus the term "substrate" as used herein embraces all kinds of glass and ceramic (including china) substrates and indeed also others, provided only that they require decoration and that there is no equally effective and cheaper way of achieving the same objective, as for instance there is with thermoplastic substrates. In short, this technique will work with a thermoplastic substrate, but there is no need to employ it since conventional hot-stamping is fully effective on thermoplastic substrates and tends to be cheaper.

Such substrates may for instance take the form of containers e.g. bottles, dishes, cups and glasses, as well as also purely decorative objects e.g. figurines, vases, windows, tiles and so on.

In the first step of the decorative method of this invention the desired decorative or other pattern is essentially "painted" onto the glass utilising an adhesive ink composition as the "paint". The "painting" may be accomplished by silk-screening, screen-printing, offset-printing, stencilling, actual painting (with a brush) or any other of the wide variety of available methods.

Generally-speaking we currently prefer to apply the desired pattern of adhesive ink by silk-screening it onto the glass container, utilising the traditional screen and squeegee well known to those skilled in the art, because it is adaptable to on-line production. However the ink may be applied by means of hand-held applicators such as paintbrushes or the like, especially where the ink is to be applied to a substrate in the form of a figurine or other like highly-decorative article which is not readily amenable to screen-printing.

Reverting now to the composition with which we are here concerned, it will be appreciated that after the curable adhesive ink composition has been applied to the substrate, the cationically radiation-curable cycloaliphatic epoxide (and thus the ink composition as a whole) must be cured by exposure to the radiation by which it is curable. We have found that the cycloaliphatic epoxide may be cured by an electron beam without further assistance, but actinic radiation (including ultra-violet radiation) will also serve to cure the epoxide (especially if assisted by the presence of a photoinitiator) and is to be preferred over an electron beam.

If the ink composition is to be cured with actinic radiation (including UV light) rather than with an electron beam, it is then very desirable that the ink composition should also contain a photoinitiator, which will catalyze the polymerization of the cycloaliphatic epoxide. If an electron beam is used, such a photoinitiator is not necessary.

Especially suitable photoinitators are carbonyl compounds such as ketones and derivatives thereof, for example methyl ethyl ketone, benzophenone, benzyl dimethyl ketal, 1 -hydroxycyclohexylphenylketone, 2,1-dimethoxy-2-phenylacetophenone, diethoxyacetophenone and 2-methyl-1-(methylethylphenyl)-2-(4-morpholinyl)-1-propanone.

Other photosensitive onium salts are particularly good UV-activated photoinitiators. The use of photosensitive onium salts to promote the curing of epoxides when exposed to UV radiation is described in U.S. Patents Nos. 4,058,401, 4,138,255 and 4,161,478, the disclosure of which is incorporated herein by cross-reference. The photosensitive onium salts mentioned in these Patents are good UV-light photoinitiators. These preferred photointiators are triaryl sulphonium salts sold by Union Carbide under the tradename CYRACURE UVI 6974.

The proportion of photoinitiator needed is not critical, but we recommend the use from about 0.5 to 20%, and preferably 3-15% by weight.

For the avoidance of doubt it is perhaps desirable to observe that the terms "actinic radiation" and "ultra-violet radiation" are here used in their normal sense, that is to say :
the term "actinic radiation" in general means light in the violet and ultra-violet regions which will bring about chemical changes, and may be regarded as corresponding to wavelengths of from 4 to 600 nm; and
the term "ultra-violet (or UV) radiation" refers to the non-visible part of actinic radiation, and may be regarded as corresponding to wavelengths of from 4 to 400nm., and preferably (for present purposes) 325-365nm.

The substrate bearing the decorative pattern of ink composition is exposed to UV light (or other radiation) for a time sufficient to effect polymerization of the epoxide and the polyol, usually for a period of from 1 to 30 minutes, and preferably for from 2 to 25 minutes, depending on how thickly the ink has been applied to the substrate.

This exposure may be conveniently accomplished by use of so-called UV-conveyers, which consist of a conveyor belt situated beneath an ultraviolet lamp, such as those manufactured by Fusion Systems. When the substrate is placed on the conveyor belt it is moved along and is irradiated by the lamp. Obviously, where longer cure times are needed, the substrate can be passed successively through several conveyors in line, or several times through the same conveyor. The conveyor system is set up so that the substrate passes through the UV-light for the total amount of time appropriate to cure the ink composition and adhere to the substrate.

In the third step of the decorative method, thus after the ink composition has been cured and is thus fully adhered to the substrate, the substrate must be stamped with hot-stamping foil, that is say a foil bearing a film of decorative material is compressed against the substrate with a compress heated to a sufficient temperature to cause the film on the hot-stamping foil to adhere to the cured ink design, but not to the ink-free areas of the glass.

The duration of the compression and the temperature of the compress are interdependent, and the optimum conditions for both can and will be determined by competent operatives in each individual case. By way of general guidance it can however be said that we have found that the compress should usually be heated to a temperature in the range of 395K-478K (250-400° F) preferably 395K-450K (250-350° F) to achieve adherence of the foil to the cured ink design. The compress must of course be pressed tightly against the substrate, and the period of such compression will range from fractions of a second up to several minutes, depending on the nature of the compress used, its temperature and the specific cycloaliphatic epoxide.

The term "hot-stamping foil" means, in general, a laminate comprised of a carrier material (often polyester, cellulose acetate, or another similar material capable of release), a release film, and a decorative or colour coat, in that order. The decorative coat is usually colour or metallized coat. The metallized coat can be actual gold, silver, or aluminium which is coloured to look like gold or silver, or have holographic properties. The coloured layer is most often applied by vacuum metallization.

More specifically, hot-stamping foil can be defined as a multilayer web comprising a backing film-carrier, a release coating, one or more protective top coatings, one or more colour coatings, and a hot-melt adhesive, in that order.

Generally, the hot-melt adhesive layer of the foil is compressed against the substrate with a heated die. The hot-melt adhesive layer adheres to the substrate, and the application of heat also causes the release layer to release the backing film carrier from the protective top-coat layer, leaving the protective top-coat layer exposed on the surface of the substrate.

The release coating is either wax (or a wax-like material) or a thermoplastic material, which melts upon application of heat to release the protective top-coat layer from the backing for release layers include ethylene vinyl acetate (EVA). acrylics, polyvinylchlorides (PVC), polyamides, or similar thermoplastic materials as set forth in U.S. Patent No. 5,104,719, the disclosure of which is hereby incorporated by cross-reference.

The protective top-coat is usually a lacquer of some type, which is capable of protecting the colour or metallized layer.

The final layer is a hot-melt adhesive, which can be a wide variety of substances, and is selected so that it is capable, upon application of heat, of adhering to the substrate to which it is applied. Suitable hot-melt adhesives generally are thermoplastic materials, such as EVA, PVC and the like.

In the fourth step of the decorative method, the hot compress is removed and along with it the foil, leaving a portion of the foil adhering to the substrate.

Thus, a portion of the hot-stamping foil, in particular the hot-melt adhesive layer and the metallized or colour layer, as well as the protective top-coat if present (in that order) remain affixed to the cured ink design such that the hot-melt adhesive adheres to the cured ink design, followed by the coloured coating layer and the protective top-coat layer on the surface of the container. The protective top-coat may or may not contain part of the release coat layer, which is designed to release the carrier layer from the protective top coat.

The decoration which is applied to the substrate is extremely durable and capable of withstanding conditions found in normal handling operations.

In order that the invention may be well understood it will now be described in more detail, though only by way of illustration, with reference to the following examples:

### Example 1- Composition of Invention

A clear adhesive ink composition was made up as follows:

| **w/w%** | **grams** |
|---|---|
| Cycloaliphatic epoxide (CYRACURE UVR 6110) 72.73 | 50 |
| Trimethylolpropane caprolactone (TONE Polyol 310) 9.10 | 6.25 |
| Triaryl sulphonium salts (s) (CYRACURE UVI 6974) 7.27 | 5.00 |
| Polyvinyl butyl ether defoamer (BYK-053) 10.90 | 7.5 |

These ingredients were mixed until dissolved, and were then ready for use as described in subsequent examples.

### Example 2 - Use of Composition in Method

The ink composition of Example 1 was silk-screened onto a glass makeup container using a 255 line screen (having about 50 fibres per square centimetre [255 fibres per square inch]) imprinted with a decorative design.

The glass container was passed through a 300 watt/9.2 metres (30 feet) per minute UV-conveyor for a total of 5 minutes to effect curing of the ink.

Gold hot-stamping foil (Crown Royal Leaf, Paterson, New Jersey, USA) was compressed against the container with a die heated to 395K (250°F) for several seconds.

The die was then removed, leaving a portion of foil adhered only to the ink design, and on peeling off the foil a gold metallic decorative design identical in appearance to gold leaf was left on the surface of the glass makeup container.

### Example 3 - Use of Composition in Method

The ink composition of Example 1 was used to hand-paint a simple design onto the side of a ceramic bowl, using a fine-tipped sable brush.

The bowl was subjected to UV-radiation by passing it through a 300 watt/9.2 metres (30 feet) per minute UV-conveyor for about 4 minutes.

Silver holographic hot-stamping foil was compressed against the cured ink design with a die heated to 288K (300°F) for several seconds.

Then the die was removed, leaving a portion of the hot-stamping foil adhered to the cured ink design, resulting in a metallic silver decoration.

## Claims

1. A radiation-curable polymer composition, suitable for use in the application of decorative coatings to glass, ceramics and other substrates by a procedure akin to that known as hot-stamping, said composition comprising:
from 10 to 90% of a cationically radiation-curable cycloaliphatic epoxide,
from 1 to 20% of an ester-containing polyol, and
from 1 to 20% of a polyalkyl ether defoaming agent.

2. A composition as claimed in claim 1, in which the cationically radiation-curable cycloaliphatic epoxide is one having at least two epoxide groups per molecule.

3. A composition as claimed in claim 1 or claim 2, in which the cationically radiation-curable cycloaliphatic epoxide is one or a mixture of more than one of the following, namely 3,4-epoxycyclohexylmethyl-3,4-epoxycyclohexane carboxylate, bis-(3,4-epoxycyclohexylymethyl)-adipate, vinylcyclohexene diepoxide, bis(2,3-epoxycyclophenyl)ether, epoxidized butadiene and 2,3-epoxy-2-methylcyclohexylmethyl-3,4-epoxy-2-methylcyclohexane carboxylate.

4. A composition as claimed in any of the preceding claims, which comprises from 35 to 90% of the cationically radiation-curable cycloaliphatic epoxide.

5. A composition as claimed in any of the preceding claims, in which the ester-containing polyol is the reaction product of a polycarboxylic acid with a polyol.

6. A composition as claimed in any of the preceding claims, in which the ester-containing polyol has a molecular weight of less than 850, and a viscosity of less than 60 Pa.s (60 poise).

7. A composition as claimed in any of the preceding claims, in which the ester-containing polyol is a polycaprolactone polyol.

8. A composition as claimed in any of the preceding claims, which comprises from 3 to 15% of the ester-containing polyol.

9. A composition as claimed in any of the preceding claims, which comprises from 1 to 10% of the defoaming agent.

10. A composition as claimed in any of the preceding claims, which comprises from 3 to 15% of the defoaming agent.

11. A composition as claimed in any of the preceding claims, in which the defoaming agent is polyvinylbutylether.

12. A composition as claimed in any of the preceding claims, which also comprises an adhesion-promoter.

13. A composition as claimed in claim 12, in which the adhesion promoter is a silane.

14. A composition as claimed in claim 12 or claim 13, which comprises from 1 to 10% of the adhesion promoter.

15. A composition as claimed in any of the preceding claims, which also comprises a photoinitiator.

16. A composition as claimed in claim 15, in which the photoinitiator is or includes a carbonyl compound.

17. A composition as claimed in claim 15, in which the photoinitiator is or includes a photosensitive onium salt.

18. A composition as claimed in any of claims 15 to 17, which comprises from 0.5 to 20% of the photoinitiator.

19. A composition as claimed in any of claims 15 to 18, which comprises from 3 to 15% of the photoinitiator.

20. A composition as claimed in any of the preceding claims, which comprises:
- from 35 to 90% of the cationically radiation-curable cycloaliphatic epoxide(s) selected from 3,4-epoxycyclohexylmethyl-3,4-epoxycyclohexane carboxylate, bis-(3,4-epoxy-cyclohexylmethyl)-adipate, vinlycyclohexene diepoxide, bis(2,3-epoxycyclophenyl)ether, epoxidized butadiene and 2,3-epoxy-2-methylcyclohexylmethyl-3,4-epoxy-2-methylcyclohexane carboxylate.
- from 3 to 15% of ester-containing polyol(s);
- from 3 to 15% of polyvinylether defoaming agent(s); and
- from 3 to 15% of a photoinitiator selected from acryloxy-functional and glycidoxy-functional silane(s).

21. A composition as claimed in any of the preceding claims, which further comprises from 1 to 50% of pigment.

## Patentansprüche

1. Strahlungshärtbare Polymermasse, geeignet zur Verwendung beim Auftragen von dekorativen Beschichtungen auf Glas, Keramik und andere Substrate durch ein Verfahren, das dem bekannten Heißprägen ähnelt, wobei die Masse umfaßt:
10 bis 90% eines kationisch strahlungshärtbaren cycloaliphatischen Epoxids,
1 bis 20% eines Ester-enthaltenden Polyols, und
1 bis 20% eines Polyalkylether-Entschäumungsmittels.

2. Masse nach Anspruch 1, wobei das kationisch strahlungshärtbare cycloaliphatische Epoxid eines mit mindestens zwei Epoxidgruppen pro Molekül ist.

3. Masse nach Anspruch 1 oder Anspruch 2, wobei das kationisch strahlungshärtbare cycloaliphatische Epoxid eines oder ein Gemisch von mehr als einem der nachstehenden, nämlich 3,4-Epoxycyclohexylmethyl-3,4-epoxycyclohexancarboxylat, Bis (3,4-epoxycyclohexylmethyl)adipat, Vinylcyclohexendiepoxid, Bis(2,3-epoxycyclophenyl)ether, epoxidiertes Butadien und 2,3-Epoxy-2-methylcyclohexylmethyl-3,4-epoxy-2-methylcyclohexancarboxylat, ist.

4. Masse nach einem der vorangehenden Ansprüche, die 35 bis 90% des kationisch strahlungshärtbaren cycloaliphatischen Epoxids umfaßt.

5. Masse nach einem der vorangehenden Ansprüche, wobei das Ester-enthaltende Polyol das Reaktionsprodukt einer Polycarbonsäure mit einem Polyol ist.

6. Masse nach einem der vorangehenden Ansprüche, wobei das Ester-enthaltende Polyol ein Molekulargewicht von weniger als 850 und eine Viskosität von weniger als 60 Pa·s (60 Poise) aufweist.

7. Masse nach einem der vorangehenden Ansprüche, wobei das Ester-enthaltende Polyol ein Polycaprolactonpolyol ist.

8. Masse nach einem der vorangehenden Ansprüche, die 3 bis 15% des Ester-enthaltenden Polyols umfaßt.

9. Masse nach einem der vorangehenden Ansprüche, die 1 bis 10% des Entschäumungsmittels umfaßt.

10. Masse nach einem der vorangehenden Ansprüche, die 3 bis 15% des Entschäumungsmittels umfaßt.

11. Masse nach einem der vorangehenden Ansprüche, wobei das Entschäumungsmittel Polyvinylbutylether ist.

12. Masse nach einem der vorangehenden Ansprüche, die ebenfalls einen Haftvermittler umfaßt.

13. Masse nach Anspruch 12, wobei der Haftvermittler ein Silan ist.

14. Masse nach Anspruch 12 oder Anspruch 13, die 1 bis 10% des Haftvermittlers umfaßt.

15. Masse nach einem der vorangehenden Ansprüche, die ebenfalls einen Photostarter umfaßt.

16. Masse nach Anspruch 15, in der der Photostarter eine Carbonylverbindung ist oder einschließt.

17. Masse nach Anspruch 15, in der der Photostarter ein lichtempfindliches Oniumsalz ist oder einschließt.

18. Masse nach einem der Ansprüche 15 bis 17, die 0,5 bis 20% des Photostarters umfaßt.

19. Masse nach einem der Ansprüche 15 bis 18, die 3 bis 15% des Photostarters umfaßt.

20. Masse nach einem der vorangehenden Ansprüche, umfassend:
- 35 bis 90% des/der kationisch strahlungshärtbaren cycloaliphatischen Epoxids/e, ausgewählt aus 3,4-Epoxycyclohexylmethyl-3,4-epoxycyclohexancarboxylat, Bis(3,4-epoxycyclohexylmethyl)adipat, Vinylcyclohexendiepoxid, Bis(2,3-epoxycyclophenyl)ether, epoxidiertes Butadien und 2,3-Epoxy-2-methylcyclohexylmethyl-3,4-epoxy-2-methylcyclohexancarboxylat,
- 3 bis 15% Ester-enthaltende/es Polyol/e;
- 3 bis 15% Polyvinylether-Entschäumungsmittel; und
- 3 bis 15% eines Photostarters, ausgewählt aus Acryloxy-funktionellem/n und Glycidyloxy-funktionellem/n Silan/en.

21. Masse nach einem der vorangehenden Ansprüche, die weiterhin 1 bis 50% Pigment umfaßt.

## Revendications

1. Composition polymère durcissable par rayonnement, convenant à une utilisation dans l'application de revêtements décoratifs sur du verre, des céramiques et d'autres subjectiles, par un mode opératoire analogue à celui qui est connu sous le nom d'estampage à chaud, ladite composition comprenant :
de 10 à 90 % d'un époxyde cycloaliphatique à durcissement cationique par rayonnement,
de 1 à 20 % d'un polyol contenant un ester, et
de 1 à 20 % d'un agent antimousse polyalkyléther.

2. Composition selon la revendication 1, dans lequel l'époxyde cycloaliphatique à durcissement cationique par rayonnement est un tel composé ayant au moins deux groupes époxyde par molécule.

3. Composition selon la revendication 1 ou 2, dans laquelle l'époxyde cycloaliphatique à durcissement cationique par rayonnement est l'un des composés ci-après, ou un mélange de plus d'un des composés ci-après, à savoir le 3,4-époxycyclohexanecarboxylate de 3,4-époxycyclohexylméthyle, l'adipate de bis(3,4-époxycyclohexylméthyle), le vinylcyclohexène-diépoxyde, le bis(2,3-époxycyclophényl)éther, le butadiène époxydé et le 3,4-époxy-2-méthylcyclohexanecarboxylate de 2,3-époxy-2-méthylcyclohexylméthyle.

4. Composition selon l'une quelconque des revendications précédentes, qui comprend de 35 à 90 % d'un époxyde cycloaliphatique à durcissement cationique par rayonnement.

5. Composition selon l'une quelconque des revendications précédentes, dans laquelle le polyol contenant un ester est un produit de la réaction d'un acide polycarboxylique avec un polyol.

6. Composition selon l'une quelconque des revendications précédentes, dans laquelle le polyol contenant un ester a une masse moléculaire inférieure à 850 et une viscosité inférieure à 60 Pa.s (60 poise).

7. Composition selon l'une quelconque des revendications précédentes, dans laquelle le polyol contenant un ester est un polycaprolactonepolyol.

8. Composition selon l'une quelconque des revendications précédentes, qui comprend de 3 à 15 % du polyol contenant un ester.

9. Composition selon l'une quelconque des revendications précédentes, qui comprend de 1 à 10 % de l'agent antimousse.

10. Composition selon l'une quelconque des revendications précédentes, qui comprend de 3 à 15 % de l'agent antimousse.

11. Composition selon l'une quelconque des revendications précédentes, dans laquelle l'agent antimousse est le polyvinylbutyléther.

12. Composition selon l'une quelconque des revendications précédentes, qui comprend aussi un promoteur d'adhérence.

13. Composition selon la revendication 12, dans laquelle le promoteur d'adhérence est un silane.

14. Composition selon la revendication 12 ou 13, qui comprend de 1 à 10 % du promoteur d'adhérence

15. Composition selon l'une quelconque des revendications précédentes, qui comprend aussi un photoamorceur.

16. Composition selon la revendication 15, dans laquelle le photoamorceur est ou comprend un composé carbonyle.

17. Composition selon la revendication 15, dans laquelle le photoamorceur est ou comprend un sel d'onium photosensible.

18. Composition selon l'une quelconque des revendications 15 à 17, qui comprend de 0,5 à 20 % du photoamorceur

19. Composition selon l'une quelconque des revendications 15 à 18, qui comprend de 3 à 15 % du photoamorceur.

20. Composition selon l'une quelconque des revendications précédentes, qui comprend :
- de 35 à 90 % du ou des époxydes cycloaliphatiques à durcissement cationique par radiation, choisis parmi :
le 3,4-époxycyclohexanecarboxylate de 3,4-époxycyclohexylméthyle, l'adipate de bis(3,4-époxycylohexylméthyle), le vinylcyclohexène-diépoxyde, le bis(2,3-époxycyclophényl)éther, le butadiène époxydé et le 3,4-époxy-2-méthylcyclohexanecarboxylate de 2,3-époxy-2-méthylcyclohexylméthyle,
- de 3 à 15 % du ou des polyols contenant un ester,
- de 3 à 15 % du ou des agents antimousse de type polyvinyléther, et
- de 3 à 15 % d'un photoamorceur choisi parmi les silanes à fonctionnalité acryloxy et glycidoxy.

21. Composition selon l'une quelconque des revendications précédentes, qui comprend en outre de 1 à 50 % d'un pigment.
